# EUROPÄISCHE PATENTANMELDUNG

(11) **EP 0 650 081 A1**
(43) Veröffentlichungstag der Anmeldung: **26.04.1995**
(21) Anmeldenummer: 94116142.4
(22) Anmeldetag: 13.10.1994
(51) Int. Cl.: G02B 6/38, F21V 8/00

(54) **Verbindungselemente für Lichtleiterelemente**

(30) Priorität: 21.10.1993 DE 9316097 U
(71) Anmelder: Röhm GmbH, D-64293 Darmstadt (DE)
(72) Erfinder: Fischer, Udo, Dr.-Ing., D-64297 Darmstadt (DE)

(57) **Zusammenfassung**

Die Erfindung betrifft Verbindungselemente (2) für Lichtleiter aus Materialien mit einer hohen spektralen Transmission, insbesondere im Wellenlängenspektrum des sichtbaren Lichts, wobei das Verbindungselement (2) aus einer Vertiefung (2a) im Lichtleiterelement (1b), jeweils mit kongruenten trapezförmigen Querschnitten, besteht. Vorzugsweise unterscheiden sich die mittleren Breiten (5) und die mittleren Höhen (6) der trapezförmigen Querschnitte um einen Faktor von mindestens 1,5. Weiterhin bevorzugt sind Lichtleiterplatten als Lichtleiterelement, die vorzugsweise aus Kunststoff, besonders bevorzugt aus Polymethylmethacrylat bestehen.

## Beschreibung

### Gebiet der Erfindung

Die Erfindung betrifft Verbindungselemente für Lichtleiterelemente, die einen im Querschnitt keilförmigen Aufbau aufweisen und die als Einkopplungselemente für Licht wirken. Vorzugsweise sind die durch die Verbindungselemente erzeugten Verbindungsstellen mechanisch lös- und verknüpfbar.

### Stand der Technik

Der Stand der Technik kennt eine Vielzahl von Verbindungselementen für Lichtleiterelemente.
So beschreibt beispielsweise DE-OS 37 29 811 eine Verbindung, bestehend aus einer Lichtleiterplatte mit Erhebungen, dadurch gekennzeichnet, daß Erhebungen und Lichtleiterplatte mittels lichtleitfähigen Steckverbindungen miteinander verbunden sind, derart, daß die Erhebungen einen lichtaufnehmenden Steckfuß und die Lichtleiterplatte eine lichtabgebende Senke aufweisen. DE-OS 37 19 499 umfaßt eine Vorrichtung, bestehend aus Lichtleiterplatten mit Erhebungen, dadurch gekennzeichnet, daß mehrere Lichtleiterplatten zu einer lichtleitfähigen Ebene aneinandergefügt werden.
Darüber hinaus umspannt der Stand der Technik keilförmige Lichtleiterelemente als wesentlichen Bestandteil von Beleuchtungselementen.

In DE-Gbm 85 22 545 wird beispielsweise eine Lichtplatte für Schilder und Lichttische beschrieben, dadurch gekennzeichnet, daß die Lichtplatte eine rechtwinklige, durchsichtige, keilförmige Platte zum Verteilen von Licht von einer oder mehreren Lichtquellen, die neben der breiten Stirnfläche der keilförmigen Platte angeordnet sind, eine an einer Seite der keilförmigen Platte angeordnete vordere Scheibe und einen an einen der anderen Seite der keilförmigen Platte angeordneten Reflektor ausweist.
DE-OS 32 35 817 umfaßt eine Vorrichtung, die im wesentlichen aus einer vor einer passiven Anzeige angeordneten, in ihrer Dicke keilförmig ausgebildeten Scheibe besteht, in die das Licht einer Lichtquelle über einen Lichtleiter vom dickeren Ende der Scheibe her an der Stirnfläche eintritt, an der vorderen aus der senkrecht zur Blickrichtung liegenden Ebene herausgeneigten Oberfläche der Scheibe reflektiert und an der mit geringem Abstand zur Anzeige hin liegenden Oberfläche der Scheibe austritt.
In EP-PS 229 863 wird eine Lichtleiterplatte mit einer oder mehreren Lichtquellen beschrieben, einer vorderen Tafel, einer im wesentlichen rechteckigen, transparenten, keilförmigen Platte, die im wesentlichen von zwei im wesentlichen dreieckigen Grundflächen, einer Vorderfläche, einer Rückfläche und einer breiten Stirnfläche begrenzt wird, wobei die Lichtquellen so angeordnet sind, daß sie die breite Stirnfläche des Keils beleuchten, sowie mit einer opalisierenden vorderen Tafel, die die Vorderfläche abdeckt, und einer lichtreflektierenden rückseitigen Tafel, die die rückseitige Fläche des Keils abdeckt, dadurch gekennzeichnet, daß die Tafeln an der Vorder- und Rückseite in einem Abstand parallel zur jeweiligen Fläche angeordnet sind.

### Aufgabe und Lösung

Die aus dem Stand der Technik bekannten Verbindungselemente für Lichtleiterelemente weisen entweder hohe Lichtverluste bei der Lichtübertragung an der Verbindungsstelle auf oder sind technisch sehr aufwendig. Zum anderen kennt man eine Reihe von Vorrichtungen, die sich keilförmiger Lichtleiterelemente bedienen, um Licht effektiv und mit wenigen Verlusten zu übertragen. Die sich hieraus ergebende Aufgabe, Verbindungselemente für Lichtleiterelemente bereitzustellen, die das Licht zwischen den Lichtleiterelementen effektiv übertragen und gleichzeitig technisch einfach zu realisieren sind, wird mit den erfindungsgemäßen Verbindungselementen für Lichtleiterelemente gelöst.

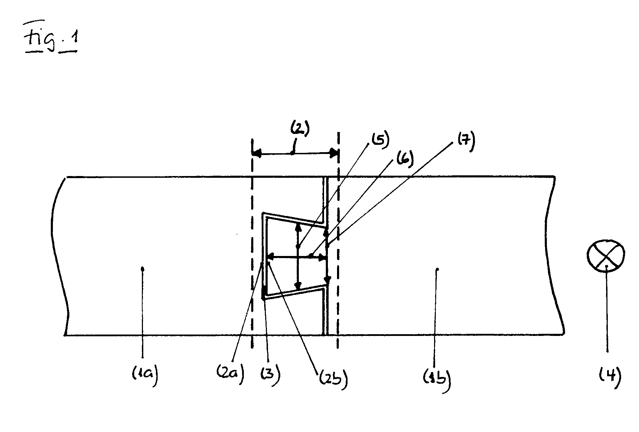

Fig. 1 zeigt den schematischen Aufbau eines Verbindungselements zwischen zwei Lichtleiterelementen (1a) und (1b). Das Verbindungselement (2) ist aus dem Möbelbau als "Schwalbenschwanz" bekannt und besteht aus einer Vertiefung (2a) mit trapezförmigem Querschnitt im Lichtleiterelement (1a) sowie einem korrespondierenden keilförmigen Aufsatz (2b) mit einem zu (2a) kongruenten trapezförmigen Querschnitt auf Lichtleiterelement (1b). Vorzugsweise sind Querschnitte der Vertiefung (2a) und des keilförmigen Aufsatzes (2b) flächenmäßig solchermaßen ausgelegt, daß die Querschnittsfläche des Hohlraums (3) zwischen Vertiefung (2a) und keilförmigem Aufatz (2b) nahe Null ist. Die Verbindung zwischen den Lichtleiterelementen (1a) und (1b), die bevorzugt plattenförmig sind, wird durch seitliches Einschieben des keilförmigen Aufsatzes (2b) von Lichtleiterelement (1b) in die Vertiefung (2a) des Lichtleiterelements (1a) bewerkstelligt. In einer weiteren bevorzugten Ausführung der Erfindung unterscheiden sich mittlere Breite (5) und Höhe (6) des trapezförmigen Querschnitts um einen Faktor von mindestens 1,5. Die Lichtquelle (4), deren Licht durch die Lichtleiterelemente (1a) und (1b) transportiert wird, ist vorzugsweise solchermaßen angeordnet, daß die Lichtstrahlen zunächst die Verbindungsfläche (7) zwischen keilförmigem Aufsatz (2b) und zugehörigem Lichtleiterelement (1b) passieren, bevor sie in den keilförmigen Aufsatz (2b) eintreten.

### Durchführung der Erfindung

Die Lichtleiterelemente (1a) und (1b) sind aus Materialien mit einer hohen spektralen Transmission, vorzugsweise im Bereich des sichtbaren Lichts, aufgebaut. Bevorzugt werden für die erfindungsgemäßen Verbindungselemente (2) sowie für die vorzugsweise aus demselben Material bestehenden Lichtleiterelemente Kunststoffe mit einem spektralen dekadischen Absorptionsmaß nach DIN 1349 von weniger als 0,035 verwendet. Ganz besonders bevorzugt wird Polymethylmethacrylat als Kunststoff für die Lichtleiterelemente (1a) und (1b) eingesetzt. Weiterhin kann der Kunststoff für die Lichtleiterelemente (1a) und (1b) partikelförmige Streuteilchen zur kontrollierten Lichtauskopplung enthalten.

Die Lichtleiterelemente (1a) und (1b) können zudem lokale Oberflächenmodifikationen aufweisen, die ebenfalls lichtauskoppelnd wirken, wie beispielsweise Aufrauhungen, Selbstklebefolien oder partikelhaltige Beschichtungen. Vorzugsweise sind die Lichtleiterelemente (1a) und (1b) plattenförmig, womit die die Verbindungselemente aufbauenden Komponenten (2a) und (2b) als Nut (2a) bzw. als Feder (2b) wirken. Weiterhin können die Lichtleiterelemente (1a und (1b) als Rundstäbe ausgelegt sein, wobei das Verbindungselement (2) wiederum nach dem Nut(2a)-Feder(2b)-Prinzip aufgebaut ist. Sowohl Vertiefung (2a) und keilförmiger Aufsatz (2b) werden mittels bekannter Bearbeitungstechniken an die Lichtleiterelemente (1a) und (1b) angebracht. So können beispielsweise die Vertiefungen (2a) durch Fräsen oder Prägen, die keilförmigen Aufsätze (2b) ebenfalls durch Fräsen oder durch Ankleben eines Keils hergestellt werden. Wichtig ist, daß beim Anbringen der Verbindungselemente die Schnittstellen frei von optischen Unruhen sind.

Vorzugsweise sind die trapezförmigen Querschnitte der Vertiefung (2a) und des keilförmigen Aufsatzes (2b) nahezu flächengleich, damit praktisch kein Hohlraum (3) gebildet wird, der aufgrund des hohen Brechzahlunterschieds zwischen dem Material des Lichtleiterelements und des Hohlraums störend auf die Lichtleitung einwirkt.
Die Lichtquelle (4) ist solchermaßen angeordnet, daß der von ihr emittierte Lichtstrom zunächst das Lichtleiterelement (1b) passiert und über den keilförmigen Aufsatz (2b) in das Lichtleiterelement (1a) mit der Vertiefung (2a) eingekoppelt wird. Für eine hohe Lichteinkopplung sehr wirksam ist eine bevorzugte Ausführungsform der Erfindung, bei der sich die mittlere Breite (5) und die Höhe (6) des trapezförmigen Querschnitts der Vertiefung (2a) bzw. des keilförmigen Aufsatzes (2b) des Verbindungselements (2) mindestens um den Faktor 1,5 unterscheiden. Als Lichtquellen (4) finden vorzugsweise Strahler Verwendung, die im Wellenlängenbereich des sichtbaren Lichts emittieren. Je nach Geometrie der Lichtleiterelemente ist die Lichtquelle punktförmig, im Fall von Rundstäben, oder linienförmig, im Falle von Lichtleiterplatten. Lichtleiterplatten können auch mit mehreren punktförmigen Lichtquellen beleuchtet werden. Vorzugsweise sind die Lichtquellen (4) in auf die Lichtleiterelemente aufsetzbaren Rahmenelementen integriert.
Die erfindungsgemäße Verbindung (2) zwischen den Lichtleiterelementen (1a) und (1b) wird vorzugsweise durch Einschieben des keilförmigen Aufsatzes (2b) in die Vertiefung (2a) realisiert.

### Vorteilhafte Wirkungen der Erfindung

Mit den erfindungsgemäßen Verbindungselementen (2) ist eine Verbindung von Lichtleiterelementen unterschiedlicher Geometrie in einfacher mechanischer Weise möglich. Der Lichtverlust am Verbindungselement (2) sowie die Lichteinkopplung von Lichtleiterlement (1b) in Lichtleiterelement (1a) sind durch die spezielle geometrische Form minimiert bzw. optimiert. Insbesondere bei Lichtleiterplatten lassen sich mit den erfindungsgemäßen Verbindungselementen (2) Modulsysteme herstellen, die bei gezielter Lichtauskopplung großflächige Lichtwerbung bzw. Signalsysteme ermöglichen.

## Patentansprüche

1. Verbindungselement (2) für Lichtleiterelemente aus Materialien mit einer hohen spektralen Transmission, ausgedrückt durch ein spektrales dekadisches Absorptionsmaß nach DIN 1349 von weniger als 0,035,
dadurch gekennzeichnet,
daß das Verbindungselement (2) aus einer Vertiefung (2a) im Lichtleiterelement (1a) und einem keilförmigen Aufsatz (2b) auf dem mit dem Lichtleiterelement (1a) zu verbindenden Lichtleiterelement (1b) besteht und daß die trapezförmigen Querschnitte der Vertiefung (2a) sowie des keilförmigen Aufsatzes (2b) kongruent sind.

2. Verbindungselemente (2) für Lichtleiterelemente gemäß Anspruch 1, dadurch gekennzeichnet, daß die Querschnittsfläche des Hohlraums (3) zwischen Vertiefung (2a) und keilförmigem Aufsatz (2b) nahe Null ist.

3. Verbindungselemente (2) für Lichtleiterelemente gemäß den Ansprüchen 1 und 2, dadurch gekennzeichnet, daß sich die mittleren Breiten (5) und die mittleren Höhen (6) der tapezförmigen Querschnitte der Vertiefung (2a) sowie des keilförmigen Aufsatzes (2b) um einen Faktor von mindestens 1,5 unterscheiden.

4. Verbindungselemente (2) für Lichtleiterelemente gemäß den Ansprüchen 1 bis 3, dadurch gekennzeichnet, daß die im Lichtleiterelement geleiteten Lichtstrahlen zunächst die Verbindungsfläche (7) zwischen keilförmigem Aufsatz (2b) und zugehörigem Lichtleiterelement (1b) passieren, bevor sie in den keilförmigen Aufsatz (2b) eintreten.

5. Verbindungselemente (2) für Lichtleiterelemente gemäß den Ansprüchen 1 bis 4, dadurch gekennzeichnet, daß die Lichtleiterelemente plattenförmig sind, wobei die Vertiefung (2a) als Nut sowie der keilförmige Aufsatz (2b) als Feder ausgelegt sind, die sich beide über die gesamte Kantenlänge der Lichtleiterplatte erstrecken.

6. Verbindungselemente (2) für Lichtleiterelemente gemäß den Ansprüchen 1 bis 5, dadurch gekennzeichnet, daß Verbindungselemente (2) und Lichtleiterelemente aus Kunststoff aufgebaut sind.

7. Verbindungselemente (2) für Lichtleiterelemente gemäß Anspruch 6, dadurch gekennzeichnet, daß der Kunststof Polymethylmethacrylat ist.
